# FASCICULE DE BREVET EUROPEEN

(11) **EP 2 433 488 B1**
(45) Date de publication et mention de la délivrance du brevet: **27.11.2013**
(21) Numéro de dépôt: 11358009.6
(22) Date de dépôt: 30.08.2011
(51) Int. Cl.: A01G 3/04, A01G 17/02

(54) **Dispositif de contournement automatique des piquets de palissage de haies fruitières, et machines agricoles en faisant application**
Vorrichtung zum automatischen Herumführen von Pfählen für Obstspaliere, und diese verwendende landwirtschaftliche Maschinen
Device for automatically pass around posts for tying berry hedges, and corresponding agricultural machines

(30) Priorité: 24.09.2010 FR 1003783
(43) Date de publication de la demande: 28.03.2012
(73) Titulaire: PELLENC (Société Anonyme), 84120 Pertuis (FR)
(72) Inventeur: Pellenc, Roger, 84120 Pertuis (FR); Gialis, Jean-Marc, 84460 Cheval Blanc (FR); Soulier, Christian, 84240 La Tour d'Aigues (FR)
(74) Mandataire: Marek, Pierre

(56) Documents cités:
- EP-A1- 2 047 740
- FR-A1- 2 554 675
- FR-A1- 2 635 251
- US-A1- 2006 162 309

## Description

La présente invention concerne un dispositif de contournement automatique des piquets de palissage ou des tuteurs de haies fruitières. Elle vise également les machines agricoles équipées d'un tel dispositif.

Plus précisément, l'invention concerne un dispositif de contournement automatique des piquets pour machines agricoles comportant une tête de travail conformée pour pouvoir chevaucher une haie fruitière cultivée sur des piquets de tuteurage ou sur un palissage, telle qu'un rang de ceps de vignes, ce palissage étant constitué par au moins un ou, généralement, par plusieurs fils de soutien superposés et espacés soutenus, de place en place, par des piquets exécutés dans un matériau rigide et résistant tel que bois, métal (fer galvanisé, acier, alliage aluminium-zinc, ..), béton, matériaux composites, etc.

Elle s'applique plus particulièrement aux machines de taille ou de prétaillage des haies fruitières.

On décrit donc plus spécialement ci-après cette application très intéressante du dispositif de l'invention aux machines agencées et utilisées pour le prétaillage de la vigne, mais on souligne que la référence à une machine de prétaillage, dans la suite du présent exposé, ne saurait avoir un caractère limitatif.

On rappelle que l'objectif du prétaillage mécanique de la vigne est de simplifier le travail ultérieur du tailleur en éliminant le maximum de bois avant la taille manuelle.

Lors de cette opération préparatoire, les bois ou sarments dont les vrilles sont fixées aux fils de palissage sont sectionnés et dégagés. La grosse difficulté de ce travail consiste à assurer le passage des piquets qui constituent des obstacles à l'avancement des organes de coupe de la tête de travail de la machine, la contrainte étant que l'action de cette dernière ne doit pas être destructrice vis-à-vis des piquets et des fils de palissage ou de ses propres organes de coupe.

La plupart des machines de prétaillage actuelles utilisent des systèmes de coupe rotatifs.

La tête de travail de ces machines comprend deux empilements d'organes de coupe rotatifs montés, de manière espacée, sur des arbres d'entraînement verticaux, ces empilements décalés en direction verticale pouvant occuper deux positions, soit :
- une position rapprochée de travail, ou position de fermeture, selon laquelle les bords des organes de coupe rotatifs des deux empilements s'interpénètrent ;
- une position d'ouverture permettant le contournement des piquets du palissage, suivant laquelle les empilements d'outils rotatifs se trouvent séparés par un espace vertical.

Plusieurs dispositifs ont été proposés pour obtenir l'ouverture automatique de la tête de travail au passage des piquets.

Selon le document EP-0 147 344, cette ouverture automatique est obtenue par la conformation des outils de coupe empilés autour des arbres d'entraînement verticaux. Ces outils de coupe comprennent une cage circulaire rotative munie, périphériquement, d'échancrures séparées par des dents et dans laquelle sont logées fixement des lames de coupe, ladite cage et lesdites lames étant agencées de manière complémentaire et associées pour constituer un système de lame et de contre-lame produisant une coupe par cisaillement.

Les cages tournantes des empilements d'outils de coupe sont entraînées en rotation à une vitesse tangentielle sensiblement égale à la vitesse linéaire d'avancement de l'engin porteur sur lequel est montée la tête de travail de la machine, de sorte que lorsque les empilements d'outils rapprochés rencontrent un piquet de palissage, ce dernier ne subit aucun choc en raison du fait que lesdits empilements roulent sur le piquet sans l'endommager et sans risque de détérioration des outils de coupe.

Les autres résultats particulièrement avantageux obtenus grâce à la machine de prétaillage décrite dans le document EP-0 147 344 sont exposés dans ledit document. Toutefois, cette machine qui a connu et connaît toujours un grand succès a un coût relativement élevé.

C'est pourquoi il a été proposé de réduire ce coût en remplaçant l'un des empilements des outils de coupe de la tête de travail par un empilement de disques ameneurs (voir par exemple FR-2 635 251), mais les résultats obtenus grâce à un tel agencement hybride sont nettement moins satisfaisants.

On trouve donc, sur le marché, des prétailleuses comportant une tête de travail ou tête de coupe constituée d'outils de coupe plus rustiques, permettant de les proposer à des prix de revient plus attractifs répondant au souhait de certains utilisateurs. Le système de coupe de ces machines comprend deux empilements d'organes d'émiettage constitués de disques d'acier échancrés en périphérie pour former des dents et des creux alternés.

Pour améliorer la qualité de coupe des bois, les dents périphériques des disques de coupe peuvent être affûtées. Les outils ou disques de coupe ainsi réalisés sont empilés sur deux arbres verticaux à une distance régulière les uns des autres de l'ordre de quelques centimètres, 10 cm par exemple.

Les deux arbres verticaux se placent de part et d'autre de l'axe du palissage et sont réglés de telle sorte que les disques d'empilement droit et les disques d'empilement gauche se croisent de quelques centimètres, 5 cm par exemple, dans le plan horizontal, en position rapprochée de travail, et sont disposés à quelques millimètres les uns des autres, 10 mm par exemple dans le plan vertical.

Le croisement des disques de l'empilement droit avec les disques de l'empilement gauche assure le sectionnement et l'émiettage des bois de la haie fruitière.

La vitesse, en périphérie, des disques de coupe tournants doit être deux fois supérieure à la vitesse de déplacement de la machine, de façon à faciliter la coupe du bois et à avoir un bon nettoyage des fils de palissage.

Cette vitesse de rotation des disques peut être ajustée au moyen d'un diviseur de débit équipant le système hydraulique d'entraînement en rotation desdits disques de coupe.

Les deux empilements de disques de coupe dentés étant maintenus en pression contre la haie fruitière, pour ne pas être éloignés l'un de l'autre sous l'effort de coupe de la végétation, ils doivent être écartés au passage de chaque piquet du palissage par l'opérateur; les disques tournant à une vitesse périphérique supérieure à la vitesse d'avancement de la machine, si l'opérateur n'écarte pas les empilements, les piquets pourraient être endommagés lorsqu'ils sont en bois ou provoquer la détérioration des disques lorsque lesdits piquets sont en acier ou en béton. De même, à l'entrée et à la sortie du rang de ceps constituant la haie fruitière, les empilements des disques de coupe sont écartés pour ne pas couper les fils de culée.

Les fils de palissage doivent être correctement tendus pour ne pas être accrochés ou sectionnés pendant le déplacement de la machine dans le rang.

La plupart des systèmes actuels du type décrit ci-dessus ne permettent pas d'obtenir une ouverture automatique de la tête de coupe lors du passage des piquets.

Certains constructeurs proposent de résoudre ce problème en utilisant des roues d'ouverture qui se montent en lieu et place de l'un des disques de chaque empilement, une sur l'arbre d'entraînement de l'empilement de droite et une sur l'arbre d'entraînement de l'empilement de gauche.

Ces roues d'ouverture ont un diamètre légèrement supérieur au diamètre des disques de coupe dentés, par exemple un diamètre supérieur de 2 cm au diamètre des disques de coupe, de sorte que lors du passage des empilements de coupe sur les piquets du palissage, ces derniers se trouvent au contact des roues d'ouverture seulement et non pas des disques de coupe.

Ces roues sont, dans certains cas, entraînées en rotation directement par le même arbre d'entraînement que les empilements de disques de coupe (voir par exemple US 2006/0162309).

La vitesse périphérique des roues d'ouverture étant supérieure à la vitesse d'avancement de la machine pour éviter un mauvais sectionnement des bois, le principal inconvénient d'un tel système est de tirer les piquets vers l'arrière, et éventuellement, de les tordre ou de les casser, lors de l'entrée en contact avec ces derniers.

Dans certains cas, les roues d'ouverture sont montées par l'intermédiaire d'un palier, de sorte à être folles. Dans ce cas, ces roues d'ouverture n'étant pas entraînées en rotation, le principal inconvénient d'un tel agencement est de pousser les piquets vers l'avant, et éventuellement, de les tordre ou de les casser, lors de la rencontre desdits piquets.

Une autre possibilité connue est de monter les roues d'ouverture par l'intermédiaire d'un palier sur les arbres d'entraînement et de les entraîner en rotation par un organe moteur extérieur aux empilements, du type, par exemple, courroie ou chaîne de transmission; les principaux inconvénients d'un tel système sont sa complexité, son encombrement et son coût relativement élevé.

Un objet de la présente invention est de remédier aux inconvénients susmentionnés des machines de prétaillage du genre comportant une tête de travail comprenant deux arbres d'entraînement verticaux sur lesquels sont montés deux empilements de disques de coupe dentés et une roue d'ouverture.

Selon l'invention, cet objectif est réalisé grâce aux caractéristiques des revendications 1 et 12, i.e, au montage de cette roue d'ouverture tournante sur l'arbre vertical d'entraînement de chaque empilement de disques de coupe dentés, au moyen d'un réducteur de vitesse accouplé audit arbre.

Grâce à cette disposition, lors du passage des piquets de palissage, les roues d'ouverture s'enroulent sur ces derniers, sans les pousser ou sans les tirer et écartent automatiquement les empilements de disques de coupe dentés.

Selon un mode de mise en oeuvre préféré, le rapport de vitesse entre la rotation des arbres d'entraînement des disques de coupe dentés et la rotation des roues d'ouverture est de 1/2, de sorte que si les disques de coupe tournent, par exemple, à 200 tr/mn, les roues d'ouverture, elles, tournent à 100 tr/mn.

Selon une autre disposition caractéristique, les réducteurs de vitesse sont constitués par des réducteurs à train épicycloïdal.

Selon une autre disposition caractéristique, l'une des faces de la roue d'ouverture de chaque empilement de disques dentés est agencée pour constituer une contre-lame montée en vis-à-vis de l'un des disques de coupe dentés de l'empilement de disques opposé.

On obtient ainsi un travail collaboratif entre la roue d'ouverture et le disque de l'empilement opposé de sorte que le palissage peut être prétaillé sur toute la hauteur des empilements.

Les buts, caractéristiques et avantages ci-dessus, et d'autres encore, ressortiront mieux de la description qui suit et des dessins annexés dans lesquels :
- la figure 1 est une vue de face illustrant un exemple de positionnement possible des roues d'ouverture dans les empilements de disques dentés ou dents de scie d'une tête de coupe de machine de prétaillage,

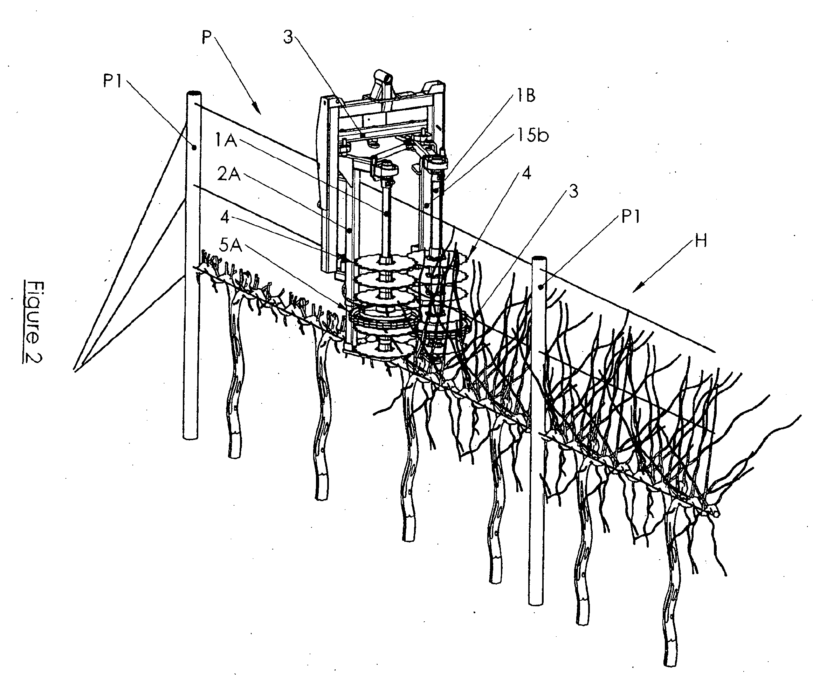

- la figure 2 est une vue d'ensemble en perspective montrant le positionnement de cette tête de coupe dans un rang de vignes,
- les figures 3A, 3B, 3C, 3D, 3E sont des vues en plan illustrant les mouvements des empilements de la tête de coupe au passage d'un piquet,
- la figure 4 est une vue en perspective éclatée illustrant un exemple de montage d'une roue d'ouverture sur un arbre d'entraînement,
- la figure 5 est une vue en coupe axiale de cet exemple de montage,

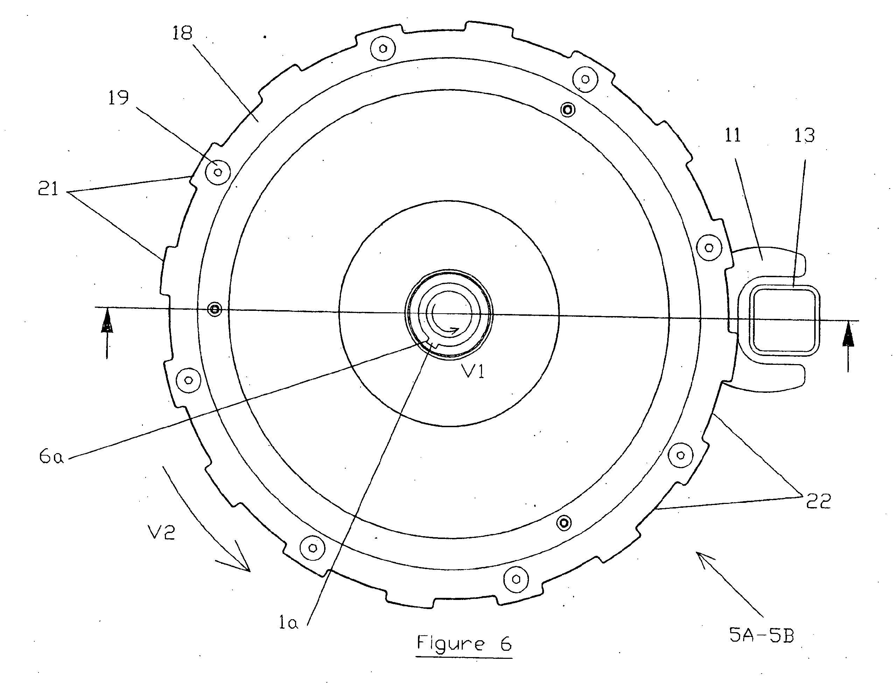

- la figure 6 est une vue en plan de la figure 5.

On se reporte auxdits dessins pour décrire un exemple intéressant, quoique nullement limitatif, de réalisation du dispositif d'ouverture de la tête de coupe selon l'invention.

On souligne que, dans la présente description et dans les revendications, l'expression « haie fruitière » désigne un rang ou alignement d'arbustes fruitiers qui peuvent être d'espèces variées cultivées sur un palissage ou sur des tuteurs, tels que des rangs de vignes.

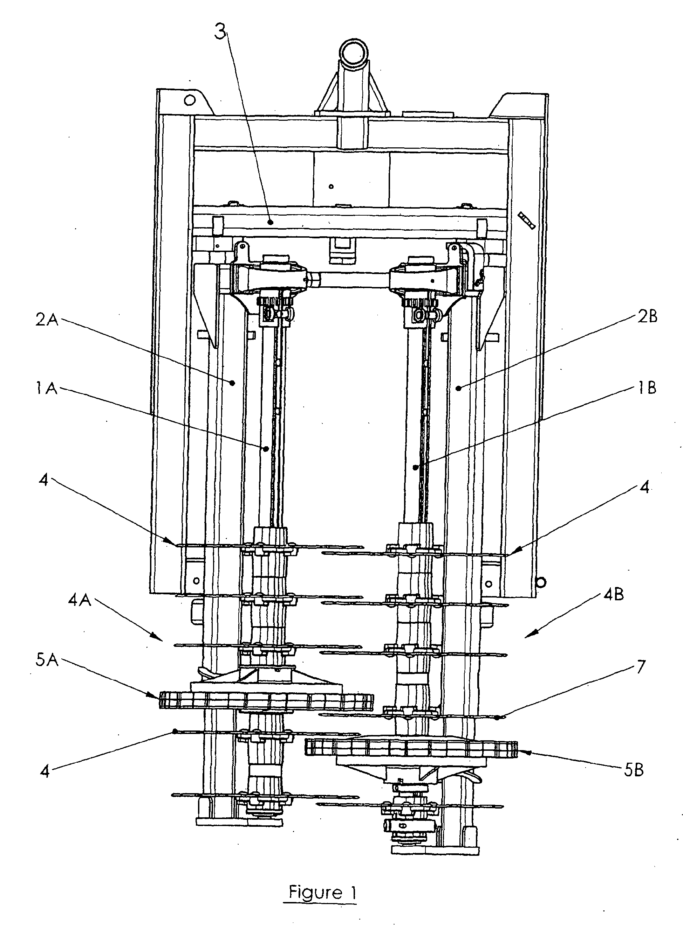

La tête de coupe de la machine de prétaillage illustrée à la figure 1 comporte deux arbres d'entraînement verticaux tournants 1A, 1B. Chacun de ces arbres est supporté par un berceau vertical pivotant 2A, 2B, et entraîné en rotation par un moteur qui peut être constitué par un moteur hydraulique accouplé à l'extrémité supérieure desdits arbres d'entraînement.

Ce berceau vertical pivotant est lui-même suspendu, de manière pendulaire et connue en soi, à un bras porteur relié de manière articulée au châssis 3 de la tête de coupe.

Sur chacun des arbres d'entraînement verticaux 1A, 1 B, sont montés des disques de coupe dentés ou scies circulaires 4, empilés sur lesdits arbres, à distance, de préférence régulière, les uns des autres. De manière connue en soi et comme indiqué précédemment, les empilements 4A, 4B sont décalés en direction verticale, de sorte que les disques de coupe dentés s'interpénètrent en position rapprochée desdits empilements ou position de fermeture de la tête de coupe. Plus précisément, les disques de coupe dentés de l'empilement droit 4A et les disques de coupe dentés de l'empilement gauche 4B se croisent, dans le plan horizontal, sur une distance de quelques centimètres, par exemple sur une distance de l'ordre de 5 cm.

Au moins une roue d'ouverture tournante 5A, 5B, est montée autour de chaque arbre vertical 1A, 1B, ces roues d'ouverture étant entraînées en rotation par lesdits arbres.

Le pivotement en sens inverse des berceaux porteurs 2A, 2B entraîne :
- soit le rapprochement des empilements de coupe en position de travail,
- soit l'écartement de ces derniers en position de contournement des piquets P1 du palissage P de la haie fruitière H.

Selon une disposition caractéristique de l'invention, chaque roue d'ouverture est montée sur son arbre d'entraînement 1A, 1B, par l'intermédiaire d'un réducteur de vitesse accouplé en rotation audit arbre.

Selon une autre disposition caractéristique avantageuse, ces réducteurs de vitesse sont constitués par des réducteurs à train épicycloïdal.

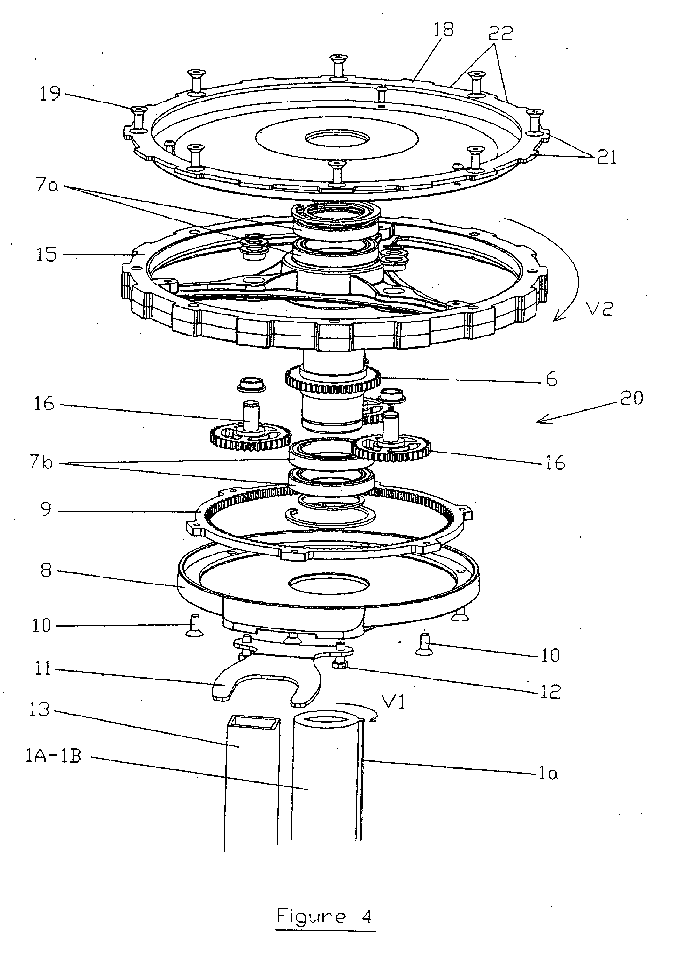

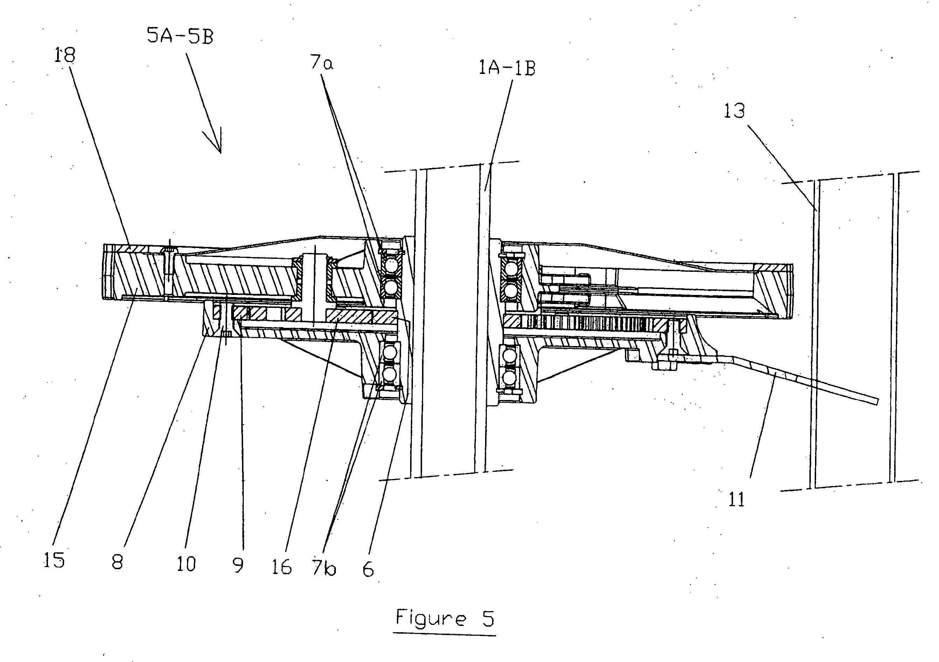

Chacun de ces réducteurs à train épicycloïdal 20 comprend (figures 4 et 5) :
- un planétaire d'entrée 6 entraîné en rotation par l'arbre 1A ou 1B dont il est solidaire en rotation au moyen d'un accouplement 1 a-6a ;
- quatre paliers emmanchés sur le planétaire 6, deux paliers 7a sur la partie supérieure et deux paliers 7b sur la partie inférieure dudit planétaire 6 ;
- un flasque 8 emmanché sur les deux paliers inférieurs 7b et sur lequel sont fixés, d'une part un deuxième planétaire de sortie 9, au moyen de vis 10, et, d'autre part, une queue d'arrêt 11 au moyen de vis 12, cette queue d'arrêt 11 prenant appui sur le tube 13 de section polygonale (par exemple quadrangulaire) du berceau vertical pivotant 2A ou 2B de la tête de coupe de façon à immobiliser en rotation le planétaire 9 ;
- un porte satellites 15 emmanché sur les deux paliers supérieurs 7a ;
- trois satellites 16 équipés d'un palier lisse 17 et montés sur le porte satellite 15.

Les satellites 16 sont en prise : - d'une part, avec la denture du planétaire 6 et, d'autre part, avec la denture du planétaire 9 constitué par une couronne circulaire dentée intérieurement.

Selon un mode d'exécution préféré, le rapport de réduction du réducteur de vitesse et, notamment, le rapport de réduction du réducteur à train épicycloïdal décrit ci-dessus, est de 1/2. Ce rapport de réduction permet d'obtenir une vitesse de rotation entre le planétaire 6 et le porte satellite 15 telle que V2 = V1 : 2, dans lequel :
- V1 = vitesse de rotation des arbres d'entraînement 1A, 1 B,
- V2 = vitesse de rotation des roues d'ouverture 5A, 5B.

Le porte satellite 15 des roues d'ouverture 5A, 5B, qui a un diamètre supérieur au diamètre des disques de coupe dentés 4, prend appui et s'enroule sur les piquets P1 du palissage P, lors de l'avancement de la machine de prétaillage sur la haie fruitière H avec une vitesse de rotation V2 qui aura été préalablement réglée par l'utilisateur pour correspondre sensiblement à la vitesse d'avancement de la machine afin de n'exercer aucune force de poussée ou de tirage sur lesdits piquets.

On comprend que selon l'agencement du réducteur à train épicycloïdal illustré aux figures 4 et 5, les roues d'ouverture 5A et 5B proprement dites sont constituées par la périphérie du porte satellite rotatif 15.

Les empilements de coupe 4A, 4B, tournent à une vitesse de rotation V1 deux fois supérieure à la vitesse de rotation V2 des roues d'ouverture et permettent un prétaillage et un émiettage des bois ou sarments d'excellente qualité, ainsi qu'un bon nettoyage des fils du palissage de la haie fruitière. Par exemple, les disques de coupe tournent à 200 tr/mn, tandis que les roues d'ouverture tournent à 100 tr/mn.

Selon une autre disposition caractéristique avantageuse de l'invention, l'une des faces de la roue d'ouverture 5A, 5B, de chaque empilement 4A, 4B est agencée pour constituer une contre-lame qui, en position active rapprochée desdits empilements, se trouve disposée face à l'une des surfaces opposées de la zone périphérique de l'un des disques de coupe 4 de l'empilement opposé 4B, 4A.

De la sorte, on obtient une action de coopération entre la roue d'ouverture et le disque de coupe disposé en vis-à-vis avec un léger décalage dans le sens vertical, et la haie fruitière peut être prétaillée sur toute la hauteur des empilements 4A et 4B.

Selon le mode d'exécution illustré aux figures 4 et 5, une contre-lame circulaire 18 est fixée, au moyen de vis 19, sur le porte satellite 15 de chaque roue d'ouverture.

La contre-lame 18 est munie, périphériquement et alternativement, de dents 21 et d'entailles 22.

La périphérie de chaque roue d'ouverture 5A, 5B, qui peut être avantageusement constituée par le porte satellite 15 du réducteur à train épicycloïdal 20, présente une conformation identique à celle de la contre-lame 18.

Une faible distance est ménagée entre la contre-lame 18 des roues d'ouverture 5A, 5B, et le disque de coupe denté 4 placé en vis-à-vis avec un léger décalage vertical, cette distance est, par exemple, de l'ordre de 10 mm.

De manière préférée, la contre-lame est disposée sur la face supérieure du réducteur à train épicycloïdal constituée par le porte-satellite 15 et elle est placée en vis-à-vis de la face inférieure du disque 4 de l'empilement opposé auquel elle est associée.

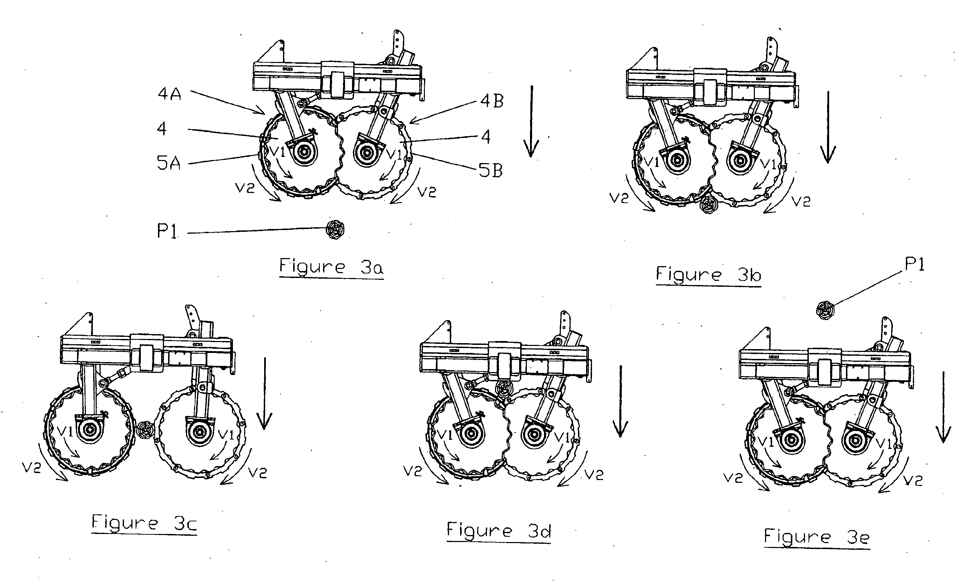

Les figures 3A à 3E illustrent le déplacement de la tête de coupe d'une machine de prétaillage sur un rang de vigne.

Sur la figure 3A, la tête de coupe se rapproche d'un piquet P1 du palissage. Les disques de coupe 4 des empilements 4A, 4B, qui s'interpénètrent, tournent à une vitesse V1 tandis que les roues d'ouverture 5A, 5B, tournent, dans le même sens, à une vitesse V2 deux fois inférieure.

La figure 3B montre l'entrée en contact des roues d'ouverture avec le piquet P1.

Sur la figure 3C, les roues d'ouverture roulent sur le piquet P1, ce qui entraîne l'éloignement des disques de coupe 4 des empilements 4A, 4B, par rapport au piquet P1.

Sur la figure 3D, le piquet P1 a été contourné et les empilements 4A, 4B, se trouvent rapprochés sous l'action des moyens de rappel (non illustré) connus en soi; dans cette position, les empilements s'interpénètrent à nouveau.

La figure 3E montre la tête de coupe s'éloignant du piquet P1 contourné.

## Revendications

1. Dispositif de contournement automatique des piquets de palissage ou des tuteurs de haies fruitières, en particulier pour machines de prétaillage, comportant une tête de travail comprenant deux arbres d'entraînement verticaux tournants (1A, 1B), sur lesquels sont montés deux empilements de disques de coupe dentés (4A, 4B) et une roue d'ouverture (5A, 5B), ces empilements pouvant occuper une position rapprochée suivant laquelle ils s'interpénètrent ou une position d'écartement suivant laquelle les disques de coupe de chaque empilement se trouvent éloignés des disques de coupe de l'autre empilement, **caractérisé en ce que** chaque roue d'ouverture (5A, 5B) est montée sur son arbre d'entraînement (1A, 1 B) par l'intermédiaire d'un réducteur de vitesse (20) accouplé audit arbre.

2. Dispositif de contournement des piquets de palissage ou des tuteurs de haies fruitières, selon la revendication 1 **caractérisé en ce que** lesdits réducteurs de vitesse sont constitués par des réducteurs à train épicycloïdal (20).

3. Dispositif de contournement des piquets de palissage ou des tuteurs de haies fruitières, selon la revendication 2 **caractérisé en ce que** chaque réducteur à train épicycloïdal (20) comprend :
- un planétaire (6) entraîné en rotation par l'arbre (1A ou 1 B) dont il est solidaire en rotation;
- quatre paliers emmanchés sur le planétaire (6), deux paliers (7a) sur la partie supérieure et deux paliers (7b) sur la partie inférieure dudit planétaire (6);
- un flasque (8) emmanché sur les deux paliers inférieurs (7b) et sur lequel sont fixés, d'une part un deuxième planétaire (9) au moyen de vis (10) et, d'autre part une queue d'arrêt (11) au moyen de vis (12), cette queue d'arrêt (11) prenant appui sur le tube (13) de section polygonale constituant le montant du berceau vertical pivotant (2A ou 2B) de la tête de coupe de façon à immobiliser en rotation le planétaire (9) ;
- un porte-satellite (15) emmanché sur les deux paliers supérieurs (7a) ;
- trois satellites (16) équipés d'un palier lisse (17) et montés sur le porte satellite (15).

4. Dispositif de contournement des piquets de palissage ou des tuteurs de haies fruitières, selon la revendication 3, **caractérisé en ce que** la roue d'ouverture est constituée par le porte-satellite 15 du train épicycloïdal.

5. Dispositif de contournement des piquets de palissage ou des tuteurs de haies fruitières, selon l'une quelconque des revendications 1 à 4, **caractérisé en ce que** le rapport de réduction du réducteur de vitesse (20) est de 1/2.

6. Dispositif de contournement des piquets de palissage ou des tuteurs de haies fruitières, selon l'une quelconque des revendications 3 à 5, **caractérisé en ce que** l'une des faces de la roue d'ouverture (5A, 5B) de chaque empilement (4A, 4B), est agencée pour constituer une contre-lame (18) qui, en position active de rapprochement des empilements (4A, 4B), se trouve disposée face à l'une des surfaces opposées de la zone périphérique de l'un des disques de coupe (4) de l'empilement opposé (4B, 4A).

7. Dispositif de contournement des piquets de palissage ou des tuteurs de haies fruitières, selon l'une quelconque des revendications 3 à 6, **caractérisé en ce qu'**une contre-lame circulaire (18) est fixée sur le porte satellite (15) du réducteur à train épicycloïdal (20).

8. Dispositif de contournement des piquets de palissage ou des tuteurs de haies fruitières, selon l'une quelconque des revendications 6 à 7, **caractérisé en ce que** la distance ménagée entre la contre-lame (18) des roues d'ouverture (5A, 5B) et le disque de coupe denté (4) placé en vis-à-vis de ladite contre-lame est de l'ordre de 10 mm.

9. Dispositif de contournement des piquets de palissage ou des tuteurs de haies fruitières, selon l'une quelconque des revendications 6 à 8, **caractérisé en ce que** la contre-lame circulaire (18) est munie, périphériquement et alternativement, de dents (21) et de creux (22).

10. Dispositif de contournement des piquets de palissage ou des tuteurs de haies fruitières, selon l'une quelconque des revendications 7 à 9, **caractérisé en ce que** la périphérie ou contour de la roue d'ouverture (5A, 5B) a une conformation identique à celle de la contre-lame (18).

11. Dispositif de contournement des piquets de palissage ou des tuteurs de haies fruitières, selon l'une quelconque des revendications 7 à 10, **caractérisé en ce que** la contre-lame circulaire (18) est disposée sur la face supérieure du réducteur à train épicycloïdal (20) constituée par le porte-satellite (15) et elle est placée en vis-à-vis de la face inférieure du disque (4) de l'empilement opposé auquel elle est associée.

12. Machine agricole, en particulier machines de prétaillage comportant une tête de travail comprenant deux arbres d'entraînement verticaux tournants (1A, 1 B), sur lesquels sont montés deux empilements de disques de coupe dentés (4A, 4B) et une roue d'ouverture (5A, 5B), ces empilements pouvant occuper une position rapprochée suivant laquelle ils s'interpénètrent, ou une position d'écartement suivant laquelle les disques de coupe de chaque empilement se trouvent éloignés des disques de coupe de l'autre empilement, **caractérisée en ce qu'**elle comporte un dispositif de contournement automatique des piquets de palissage ou des tuteurs de haies fruitières, selon l'une quelconque des revendications 1 à 11.

## Patentansprüche

1. Vorrichtung zum automatischen Herumführen um Pfähle von Obstsparlieren oder Wachstumshilfen für Obsthecken, insbesondere für Vorschnittmaschinen umfassend:
einen Arbeitskopf mit zwei vertikal rotierenden Antriebswellen (1A, 1B), auf die zwei Stapel von verzahnten Trennscheiben (4A, 4B) und ein Spreizrad (5A, 5B) montiert sind, wobei die Stapel eine geschlossene Position einnehmen können, bei der die Trennscheiben ineinander eingreifen oder eine gespreizte Position, bei der die Trennscheiben eines jeden Stapels von den Trennscheiben des anderen Stapels entfernt sind,
**dadurch gekennzeichnet dass** jedes Spreizrad (5A, 5b) auf ihrer Antriebswelle (1A, 1B) so montiert ist, dass es mittels eines Untersetzungsgetriebes (20) mit der Welle gekoppelt ist.

2. Vorrichtung zum automatischen Herumführen um Pfähle von Obstsparlieren oder Wachstumshilfen für Obsthecken nach Anspruch 1, **dadurch gekennzeichnet, dass** die Untersetzungsgetriebe (20) mittels Untersetzungsplanetengetriebe (20) ausgebildet sind.

3. Vorrichtung zum automatischen Herumführen um Pfähle von Obstsparlieren oder Wachstumshilfen für Obsthecken nach Anspruch 2, **dadurch gekennzeichnet, dass** jedes Planetengetriebe (20) folgendes aufweist:
- ein über die Antriebswelle (1A oder 1B) in Drehung versetzbares Sonnenrad (6), mit dem es sich zusammen dreht;
- vier auf das Sonnenrad (6) eingesetzte Zahnräder, zwei Lager (7A) auf der Oberseite und zwei Lager (7B) an dem unteren Abschnitt des Sonnenrades (6);
- ein Flansch (8), der auf die beiden unteren Lager (7B) aufgebracht ist und auf dessen Seite ein zweites Sonnenrad (9) mittels Schrauben befestigt ist und auf der anderen Seite ein Stoppendelement (11) mittels Schrauben (12) befestigt ist, wobei das Stoppendelement (11) auf dem Rohr (13) mit polygonalem Querschnitt angreift, der den vertikalen Wiegepfosten (2A oder 2B) des Schneidkopfes bildet, derart um die Rotation des Sonnenrades zu blockieren;
- ein Planetenträger (15), der auf den beiden oberen Zahnrädern (7A) aufgebracht ist;
- drei Planetenräder (16) ausgestattet mit einem Gleitlager (17) und montiert auf dem Planetenträger (15).

4. Vorrichtung zum automatischen Herumführen um Pfähle von Obstsparlieren oder Wachstumshilfen für Obsthecken nach Anspruch 3, **dadurch gekennzeichnet, dass** das Spreizrad durch den Planetenträger (15) des Planetengetriebes gebildet ist.

5. Vorrichtung zum automatischen Herumführen um Pfähle von Obstsparlieren oder Wachstumshilfen für Obsthecken gemäß einem der Ansprüche 1- bis 4, **dadurch gekennzeichnet, dass** das Untersetzungsverhältnis des Untersetzungsgetriebes ½ ist.

6. Vorrichtung zum automatischen Herumführen um Pfähle von Obstsparlieren oder Wachstumshilfen für Obsthecken gemäß einem der Ansprüche 3 bis 5, **dadurch gekennzeichnet, dass** die eine der Seiten des Spreizrades (5A, 5B) jedes Stapels (4A, 4B) ausgelegt ist, um eine Gegenklinge (18) auszubilden, die sich in geschlossener aktiver Position der Stapel (4A, 4B) gegenüber einer der gegenüberliegenden Oberflächen der Randzone einer der Trennscheiben (4) des gegenüberliegenden Stapels (4A, 4B) befindet.

7. Vorrichtung zum automatischen Herumführen um Pfähle von Obstsparlieren oder Wachstumshilfen für Obsthecken gemäß einem der vorhergehenden Ansprüche 3 bis 6, **dadurch gekennzeichnet, dass** eine kreisförmige Gegenklinge (18) auf dem Planetenträger (15) des Untersetzungsplanetengetriebes (20) befestigt ist.

8. Vorrichtung zum automatischen Herumführen um Pfähle von Obstsparlieren oder Wachstumshilfen für Obsthecken nach einem der Ansprüche 6 bis 7, **dadurch gekennzeichnet, dass** zwischen der Gegenklinge (18) der Spreizräder (5A, 5B) und der zu dieser gegenüberliegend angeordneten gezahnten Trennscheibe (4) ein Abstand gebildet ist, der in der Größenordnung von 10mm liegt.

9. Vorrichtung zum automatischen Herumführen um Pfähle von Obstsparlieren oder Wachstumshilfen für Obsthecken gemäß wenigstens einem der Ansprüche 6 bis 8, **dadurch gekennzeichnet, dass** die kreisförmige Gegenklinge (18) ausgebildet ist mit peripher und abwechselnd angeordneten Zähnen (21) und Aussparungen (22).

10. Vorrichtung zum automatischen Herumführen um Pfähle von Obstsparlieren oder Wachstumshilfen für Obsthecken nach einem der Ansprüche 7 bis 9, **dadurch gekennzeichnet, dass** der Umfang oder der Rand des Spreizrades (5A, 5B) eine zu der Gegenklinge (18) identische Gestaltung aufweist.

11. Vorrichtung zum automatischen Herumführen um Pfähle von Obstsparlieren oder Wachstumshilfen für Obsthecken gemäß einem der Ansprüche 7 bis 10, **dadurch gekennzeichnet, dass** die kreisförmige Gegenklinge (18) auf der Oberseite des Untersetzungsgetriebes (20) angeordnet ist, gebildet durch den Planetenträger (15) und diese gegenüber der Unterseite Scheibe (4) des gegenüberliegenden Stapels platziert ist, dem sie zugeordnet ist.

12. Landwirtschaftliche Maschine, insbesondere Vorschnittmaschine, mit einem Arbeitskopf, umfassend zwei sich vertikal drehende Antriebswellen (1A, 1 B), auf denen zwei Stapel von Trennscheiben (4A, 4B) und ein Spreizrad (5A, 5B) montiert ist, wobei die Stapel eine geschlossene Position einnehmen können, bei der sie ineinander eingreifen, oder eine gespreizte Position, bei der die Trennscheiben eines jeden Stapels von den Trennscheiben des anderen Stapels entfernt sind, **dadurch gekennzeichnet, dass** diese eine Vorrichtung zum automatischen Herumführen um Pfähle von Obstsparlieren oder Wachstumshilfen für Obsthecken gemäß einem der Ansprüche 1 bis 11 aufweist.

## Claims

1. A device for automatically wrapping around training posts or stakes of fruit-bearing hedges, in particular for trimming machines, comprising a working head having two vertical rotary drive shafts (1A, 1B), on which are mounted two stacks of toothed cutting discs (4A, 4B) and an opening wheel (5A, 5B), which stacks can occupy a moved-together position in which they penetrate into each other or a moved-apart position in which the cutting discs of each stack are moved away from the cutting discs of the other stack, **characterised in that** each opening wheel (5A, 5B) is mounted on its drive shaft (1A, 1B) by way of a speed reducing means (20) coupled to said shaft.

2. A device for automatically wrapping around training posts or stakes of fruit-bearing hedges according to claim 1 **characterised in that** said speed reducing means are formed by epicyclic train reducing means (20).

3. A device for automatically wrapping around training posts or stakes of fruit-bearing hedges according to claim 2 **characterised in that** each epicyclic train reducing means (20) comprises:
- a sun gear (6) driven in rotation by the shaft (1A, 1B) to which it is non-rotatably fixed;
- four bearings mounted on the sun gear (6), two bearings (7a) on the upper part of the sun gear (6) and two bearings (7b) on the lower part of the sun gear (6),
- a flange (8) fitted on the two lower bearings (7b) and on which are fixed on the one hand a second sun gear (9) by means of screws (10) and on the other hand a stop tail (11) by means of screws (12), said stop tail (11) bearing against the tube (13) of polygonal section constituting the upright of the pivotal vertical cradle (2A or 2B) of the cutting head so as to stop the sun gear (9) from rotating;
- a planet gear carrier (15) fitted on the two upper bearings (7a); and
- three planet gears (16) provided with a plain bearing (17) and mounted on the planet gear carrier (15).

4. A device for automatically wrapping around training posts or stakes of fruit-bearing hedges according to claim 3 **characterised in that** the opening wheel is formed by the planet gear carrier (15) of the epicyclic train.

5. A device for automatically wrapping around training posts or stakes of fruit-bearing hedges according to any one of claims 1 to 4 **characterised in that** the reduction ratio of the speed reducing means (20) is 1/2.

6. A device for automatically wrapping around training posts or stakes of fruit-bearing hedges according to any one of claims 3 to 5 **characterised in that** one of the faces of the opening wheel (5A, 5B) of each stack (4A, 4B) is so arranged as to form a counterpart blade (18) which in the active moved-together position of the stacks (4A, 4B) is disposed in facing relationship with one of the opposite surfaces of the peripheral zone of one of the cutting discs (4) of the opposite stack (4B, 4A).

7. A device for automatically wrapping around training posts or stakes of fruit-bearing hedges according to any one of claims 3 to 6 **characterised in that** a circular counterpart blade (18) is fixed on the planet gear carrier (15) of the epicyclic train reducing means (20).

8. A device for automatically wrapping around training posts or stakes of fruit-bearing hedges according to any one of claims 6 and 7 **characterised in that** the distance between the counterpart blade (18) of the opening wheels (5A, 5B) and the toothed cutting disc (4) positioned in facing relationship with said counterpart blade is of the order of 10 mm.

9. A device for automatically wrapping around training posts or stakes of fruit-bearing hedges according to any one of claims 6 to 8 **characterised in that** the circular counterpart blade (18) is provided peripherally and alternatively with teeth (21) and recesses (22).

10. A device for automatically wrapping around training posts or stakes of fruit-bearing hedges according to any one of claims 7 to 9 **characterised in that** the periphery or contour of the opening wheel (5A, 5B) is of a configuration identical to that of the counterpart blade (18).

11. A device for automatically wrapping around training posts or stakes of fruit-bearing hedges according to any one of claims 7 to 10 **characterised in that** the circular counterpart blade (18) is disposed on the upper face of the epicyclic train reducing means (20) formed by the planet gear carrier (15) and it is positioned in facing relationship with the lower face of the disc (14) of the opposite stack with which it is associated.

12. An agricultural machine, in particular trimming machines, comprising a working head having two vertical rotary drive shafts (1A, 1B), on which are mounted two stacks of toothed cutting discs (4A, 4B) and an opening wheel (5A, 5B), which stacks can occupy a moved-together position in which they penetrate into each other or a moved-apart position in which the cutting discs of each stack are moved away from the cutting discs of the other stack, **characterised in that** it comprises a device for automatic wrapping around training posts or stakes of fruit-bearing hedges according to any one of claims 1 to 11.
